Europäisches Patentamt

European Patent Office

Office européen des brevets

(11) Publication number: **0 296 791**
**A2**

# (12) EUROPEAN PATENT APPLICATION

(21) Application number: 88305629.3

(51) Int. Cl.⁴: **B03B 9/06** , **H01B 15/00**

(22) Date of filing: 21.06.88

(30) Priority: 22.06.87 AU 2604/87

(43) Date of publication of application:
28.12.88 Bulletin 88/52

(84) Designated Contracting States:
AT BE CH DE ES FR GB GR IT LI LU NL SE

(71) Applicant: **DESIGN COUNT PTY. LTD.**
**25 Hinkler Street**
**Mordialloc Victoria 3195(AU)**

(72) Inventor: **Calkoen, Guido Meynout**
**28 Falconer Street**
**Glen Waverley Victoria(AU)**

(74) Representative: **Gillam, Francis Cyril et al**
**SANDERSON & CO. European Patent**
**Attorneys 34, East Stockwell Street**
**Colchester Essex CO1 1ST(GB)**

(54) **Non-Ferrous metal stripping from electric cables.**

(57) The present invention relates to apparatus used for separating copper metal wire or other non ferrous metal wire from plastics material sheathing in installations for recycling used electric wire cable or the like, the apparatus being adapted to receive short discrete lengths of the electric cable or the like and includes mechanical beating or agitating elements to subject the short discrete cable lengths to severe mechanical stress whereby the metallic wire or cable is dislodged from the plastics material sheathing, the dislodged metal particles and plastics material particles thereafter being discharged to separating equipment to separate the metallic particles from the plastics material.

FIGURE. 1

# NON-FERROUS METAL STRIPPING FROM ELECTRIC CABLES

The present invention relates to methods and apparatus for separating non-ferrous metal wire or wire strands in cable format from an outer protective casing of plastics material such as PVC. Most commonly the non-ferrous metal would be copper but the invention would be applicable to other metals, such as, aluminium. The term "wire" is used herein to define any elongated metal wire element whether of single or multi-strand configuration. The invention as described hereinafter refers to copper as the metal retrieved, however, it will be understood that other metals could equally be obtained by the methods and apparatus of this invention.

Old or used electric wiring cable is often retrieved from building sites under demolition or restoration for the purpose of recycling the copper content of the wiring and to a lesser extent, recycling the plastics material coverings. The reasons for this is that there are large quantities of this material and the copper particularly is valuable if there can be provided simple and cost effective machinery and methods for separating the copper from the plastics material. There are, however, numerous difficulties with these procedures. Firstly, the cable can be of many different types. It could include single core copper, double or tripple core copper, it may include single strand or multiple wound strand wire, and the copper content may be singly sheathed or sheathed in multiple layers of plastics material. Moreover, the cable itself could comprise short or long lengths without any uniformity and certainly the cable is most unlikely to be neatly wound on any storage drums or the like. Conventionally, therefore, there have been great difficulties in providing any automatic means for separating such copper from the plastics material with reasonable volume rates and with satisfactory separation of plastics material, i.e. removal of sufficient quantities of the plastics material to satisfy environmental requirements on reprocessing the copper. Machinery has been proposed whereby longitudinal cuts through the plastics material sheathing are made and the sheathing is bodily stripped from the copper core. This type of machinery has suffered simply from the fact that the copper containing cable that can be supplied to such machinery is not in a form suitable for high volume throughputs or alternatively excessive sorting and other pre-stripping steps need to be taken making the process and machinery uneconomic. Other forms of machinery have been proposed whereby the electric cable has been transversely chopped (both wire and plastics sheathing) into very small longitudinal lengths to dislodge copper from the plastics material. The copper then being separated from the plastics material by any suitable means. Machines using this process, however, provide very high and unacceptable carry over of plastics material in the copper particles leaving the separation area and moreover incomplete separation of copper from the plastics material to the extent that it is common for the plastics material to be recycled through the chopping machinery. These processes have therefore also resulted in relatively low volume throughput with often an unacceptably high plastics material content in the copper particles leaving the separation apparatus.

The object of the present invention is therefore to provide apparatus and methods for separating copper or other non-ferrous metal from material in the form of non-ferrous metal wire sheathed in plastics material such electric wires or cables with improved volume handling rates while still obtaining suitably high separation of plastics material from the non-ferrous metal. Accordingly, the present invention comprises a method of separating non-ferrous metal fron a material in the form of non-ferrous metal wire sheathed in plastics material, said method comprising separation or dividing the material into short discrete lengths, subjecting the short discrete lengths to intensive mechanical agitation or beating whereby the non-ferrous metal is dislodged from surrounding plastics material in said short discrete lengths, and passing said non-ferrous metal and plastics material exiting from said mechanical agitation or beating to a separation step whereby the dislodged non-ferrous metal and plastics material are collected separately. The initial separation of the material (electric cable or the like) into discrete separate lengths may be by a fast acting guillotine or any other suitable chopping machinery or process. Conveniently, more than one such cutting or chopping machine might be employed feeding directly to a single mechanical agitation or beating device. The separation means used might include conventional vibrating screen separators, vortex separators, magnetic separators or any combination of these.

In accordance with a further aspect of the present invention, apparatus is provided for use in an installation for separating non-ferrous metal wire from plastics material sheathing commonly existing in electric cables or wires, said apparatus comprising a housing adapted to receive short discrete lengths of non-ferrous metal wire sheathed in plastics material from cutter or chopping means, mechanical agitating or beating means located within said housing arranged to mechanically stress said discrete lengths of non-ferrous metal wire sheathed in plastics material to dislodge the non-ferrous metal from the plastics material sheathing, and means for delivering said plastics material sheathing and dislodged non-ferrous metal to separator means. In one preferred embodiment said housing includes a rotor including a plurality of pin like projections co-operating with a plurality of stationary pin like projections extending from a housing wall, the discrete lengths of non-ferrous metal wire sheathed in plastics material being centrally introduced and thrown outwardly through said co-operating pin like projections by centrifugal motion, and exit means from said housing being located externally of said co-operating pin like projections. Preferably said exit means comprises a tangentially directed opening to provide motive force to move dislodged non-ferrous metal and plastics material particles to suitable separation equipment.

In accordance with a still further aspect, the present invention provides an installation for separating non-ferrous wire from plastics material sheathed wire cable comprising in combination means for chopping or separating said cable into discrete short lengths, means for feeding said short lengths of cable to an agitation device, said agitation device including mechanical agitating or beating means arranged to subject said short lengths of cable to mechanical stress to dislodge the non-ferrous metal wire from said plastics material sheathing, and separation means arranged to receive the non-ferrous metal wire and plastics material sheathing dislodged by said agitation means and to separate said plastics material sheathing from said non-ferrous metal wire. Conveniently the separation means separate the material leaving the agitation means into non-ferrous metal, plastics material and a mixture of non-ferrous metal and plastics material, the non-ferrous metal being delivered to a first collection point, the plastics material being delivered to a second collection point and the mixture of non-ferrous metal and plastics material being delivered to an input of the agitation means to be recycled therethrough. The separation means may conveniently be a vibrating screen separator. Preferably the means for chopping or separating the cable includes a plurality of chopping or separating devices whereby the cable is progressively decreased in length. Preferably, a storage bin is provided in the infeed line to the agitation means to ensure a constant supply thereto.

Preferred embodiments in accordance with the present invention will hereinafter be described with reference to the accompanying drawings, in which :

Figure 1 is a longitudinal cross-sectional view of a first preferred embodiment of apparatus for dislodging copper wire from short lengths of sheathed copper wire cable taken along line B-B of Figure 2;

Figure 2 is a transverse cross-sectional view taken along line A-A of Figure 1;

Figure 3 is a longitudinal cross-sectional view similar to Figure 1 showing a second preferred embodiment;

Figure 4 is a schematic layout drawing illustrating one preferred installation for separating copper wire from sheathed copper wire cable utilising apparatus according to Figures 1 to 3; and

Figure 5 is a cross-sectional view of a granulating machine used in the installation of Figure 4.

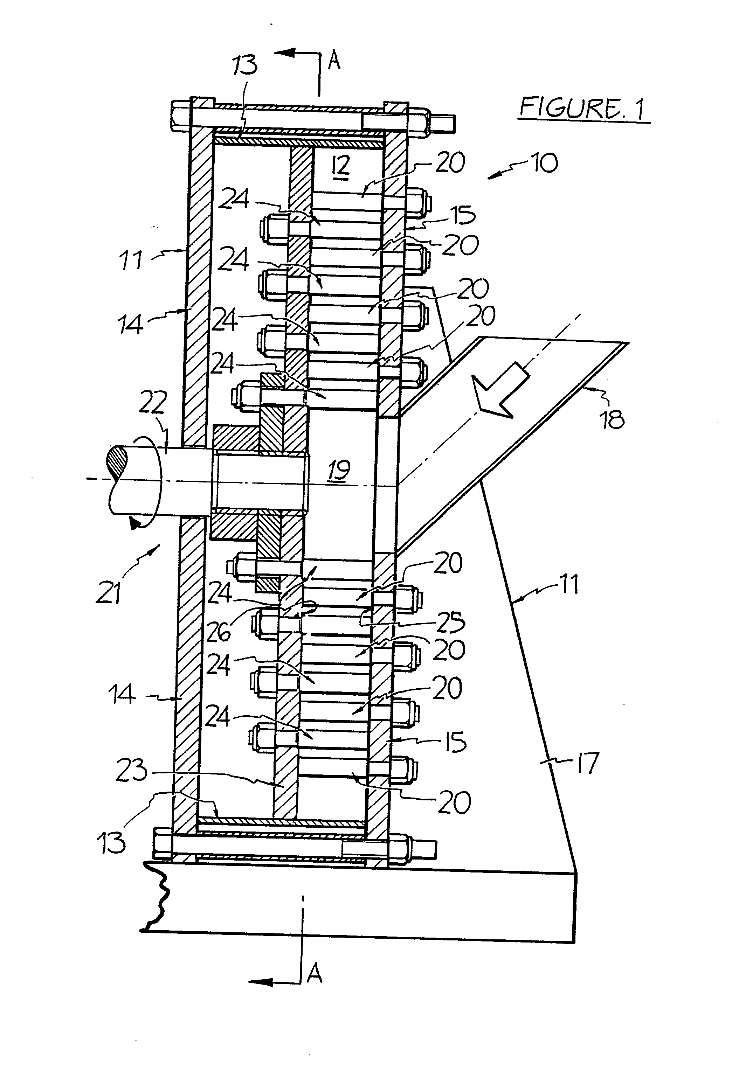

The accompanying drawings illustrate apparatus in accordance with the present invention where short discrete lengths of electric cable including copper wire or the like and surrounding plastics material sheathing are fed thereto and subjected to mechanical agitation and/or beating. The electric cable being subjected previously to a cutting or guillotining operation to produce the short lengths generally of about 15 mm or less in length, preferably in the range of 3 mm to 6 mm. As shown in Figure 1, the apparatus 10 comprises a stationary housing 11 defining a generally cylindrical treatment zone 12. The stationary housing is formed by a cylindrical wall 13, rigid end plates 14 and 15, a base plate 16 and stabilising supports 17. A plurality of fastening bolts 28 are provided around the periphery of the wall 13 to hold the assembly of the wall 13 and end plates 14, 15 together. Spacer tubes 29 around each bolt 28 maintain the correct spacing between the plates 14 and 15. An infeed chute 18 is provided to deliver the small discrete lengths of electric cable to a central region 19 of the housing treatment zone 12. Attached to the stationary wall 15 are a plurality of stationary pins 20 extending generally perpendicular to the wall 15 or axially through the treatment zone 12. The pins, however, are arranged in rings of increasing diameter around the central infeed region 19.

A rotor construction 21 is also provided generally within the housing 11. The rotor construction 21 includes a drive shaft 22 extending through the wall 14 opposite the infeed chute 18, the shaft 22 being mounted in externally located bearings and driven by suitable drive means (not shown). Within the housing 11, the rotor construction 21 includes a plate 23 and a plurality of pins 24 extending through the treatment zone 12 generally at right angles to the plate 23. The pins 24 are also generally arranged in rings of increasing diameter such that the rings of pins 24 are alternately located between the stationary pins 20. Thus upon rotation of the drive shaft 22, the plate 23 and pins 24 are adapted to also rotate whereby the pins 24 rotate between rows of the stationary pins 20. The shaft 22 may conveniently be rotated at a speed of about 1400 rpm. The pins 20, 24 as shown in the drawings are circular in cross-sectional shape, however pins with polygonal cross-section may also be used. By rotation of the drive shaft, the short lengths of electric cable fed to the zone 19 are given a centrifugal force whereby they are moved outwardly while undergoing severe agitation or beating by the co-operating pins 20, 24. The stationary plate 15 has an inwardly directed surface 25 while the rotor plate 23 has an inwardly directed surface 26 which are ground flat and positioned accurately whereby the pins 20 and 24 have ends positioned very close to the respective surfaces 26 and 25. In this manner, the passage of cable lengths outwardly is prevented without undergoing the beating action of the pins 20 and 24. Any other means to effect this action might equally be employed.

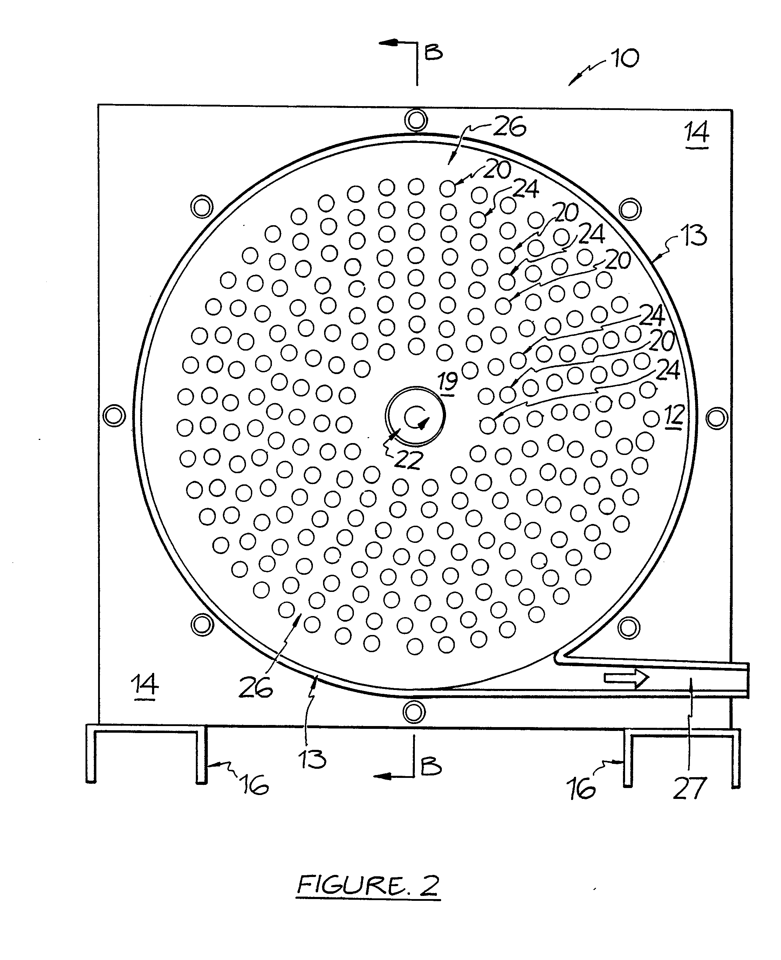

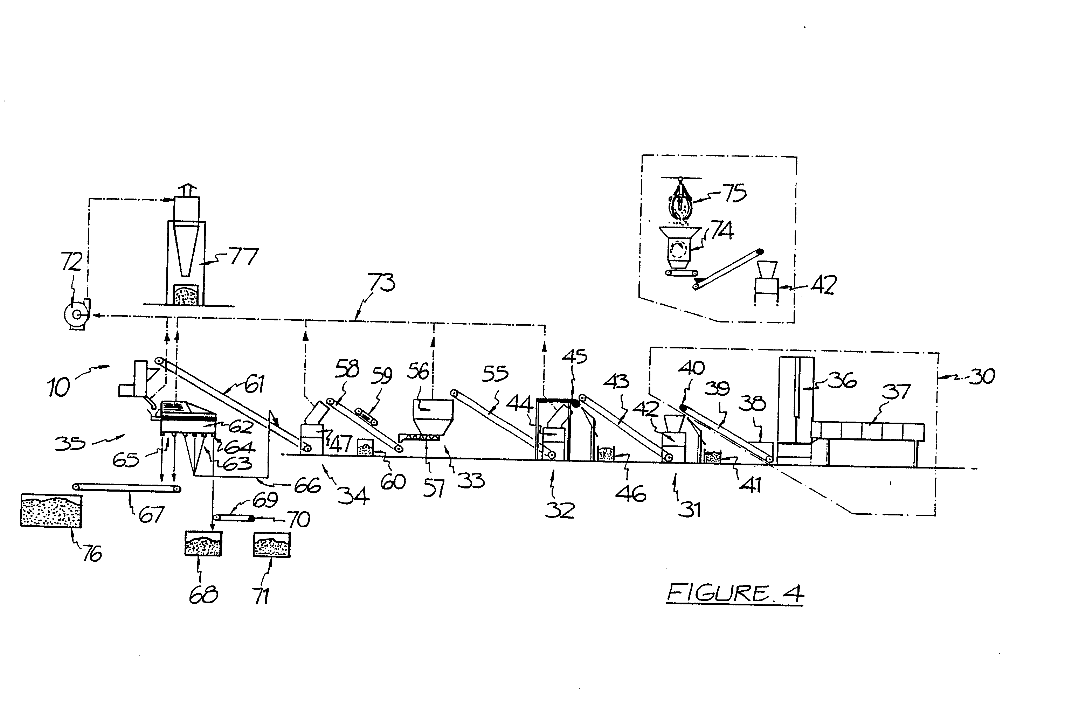

As is best seen in Figure 2, an exit passage 27 is provided leading tangentially from a region outwardly of the pins 20, 24. The plastics material and copper after being dislodged by the mechanical beating action of the pins 20, 24 travel out the exit passage 27 to a suitable separator mechanism shown in Figure 4. The separator mechanism might comprise vibrating screens but any other mechanism could equally be employed.

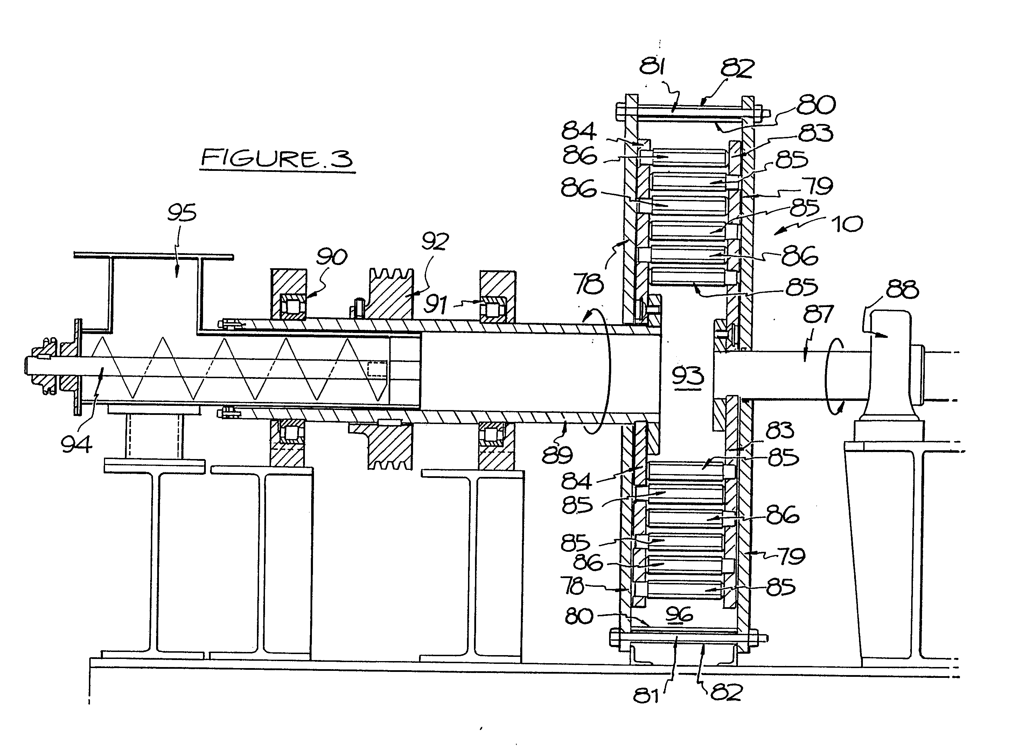

Referring to Figure 3, there is shown an alternative embodiment to the arrangement shown in Figure 1. In this embodiment, a stationary housing is provided made up by spaced plate walls 78,79 and a circumferential wall 80. A plurality of bolts 81 with spacer sleeves 82 are provided to hold the plate walls 78,79 together at the desired spacing. Within the stationary housing there is provided a pair of rotatable plates 83,84, each with an array of pins 85,86 extending across the housing to a position adjacent the other rotatable plate. As with the embodiment shown in Figure 1, the pins 85,86 are arranged in concentric circles of increasing diameter such that the pins 85 of the plate 83 alternate with the pins 86 of the plate 84 when moving through the pin array in an outward direction. In this embodiment each pin 85,86 has a hexagonal cross-section. The plate 83 is mounted to a shaft 87 supported in suitable bearing means 88 and driven by any suitable drive means (not shown) to rotate the pins 85 in a first direction through the housing. An annular shaft 89 is provided connected to the second rotatable plate 84 and is mounted in bearings 90,91. A drive pulley 92 may be connected to the shaft and driven by drive means (not shown) for driving the shaft 89 and thereby the pins 86 in a second direction opposite to the direction of rotation of the pins 85. Conveniently the shafts 87 and 89 are each rotated at a speed of about 700 rpm to give an effective relative rotation of the pins 85 and 86 of about 1400 rpm similar to that described in the foregoing with reference to Figure 1.

The annular shaft 89 serves the additional purpose of providing an inlet passage to the inner zone 93 of the stationary housing. An auger feed device 94 with an inlet chute 95 may be provided to feed short discrete lengths of cut or chopped electric cable to the inner zone 93. As with the embodiment of Figure 1, a tangential exit or discharge chute may be provided leading from the outer zone 96 of the housing.

Referring now to Figure 4, there is shown schematically a complete installation for handling treatment of waste wire cable or the like to separately recover the non-ferrous metal (usually copper) and the plastics material sheathing. Normally waste wire cable or the like is recovered from buildings under demolition. The cable is often tangled and may comprise different sizes (thicknesses and lengths) of cable, multi-strand cable, single wire cable and braided wire cable. The waste cable received may of course also include other undesirable elements such as ferrous metal fastening elements, and other debris picked up from the building demolition site. In the installation shown in Figure 4, the arrangement comprises a precutting zone 30, a shredding zone 31, a first granulation stage 32, a bulk storage bin zone 33, a second granulation stage 34, an agitation apparatus 10 (as previously described with reference to Figures 1 to 3) and a separation stage 35. In the precutting zone 30 there is provided a guillotine 36 and an infeed conveyor 37 for feeding essentially non sorted electric cable to the guillotine 36. The waste cable to be treated may be delivered from a building demolition site or the like to a nearby bulk storage zone and from there could be delivered by a forklift grab truck to the start of the conveyor 37. The only preliminary pre-sorting needed is to remove from the tangled cable any unwanted heavy debris that would be likely to damage the guillotine and any of the subsequent shredding/granulating machinery.

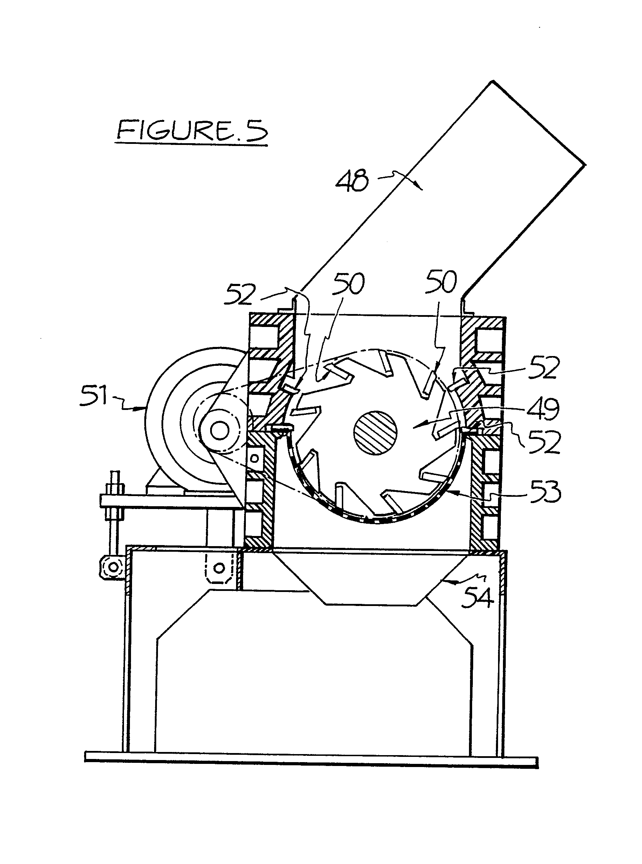

The guillotine 36 is arranged to chop the cable into lengths of about 300 to 600 mm and deliver such cut lengths of cable to an infeed storage bin 38 for a conveyor 39. The conveyor 39 includes a magnetic roller separator arrangement 40 adapted to pick up any ferrous metal elements that pass the guillotine and deliver same to a waste storage bin 41. The remainder of the cut cable travels from the conveyor 39 into a shredder 42 which shreds the cable lengths to lengths of about 50 mm. From the shredder 42 a further conveyor 43 delivers the cable lengths to an infeed chute of a first granulator 44. A magnetic drum separator unit 45 is also provided adjacent the outfeed end of the conveyor 43 to separate any further ferrous elements that might have passed through the shredder 42 and deliver same to a second waste storage bin 46. Each of the granulators 44 and 47 in the first and second granulator zones are essentially constructed as shown in Figure 5.

As illustrated in Figure 5, each of the granulators 44,47 comprise an infeed chute 48, a cutter rotor 49 with a plurality of cutting blades 50. The rotor 49 is driven by a motor 51. The rotor cutting blades 50 co-operate with stationary cutting blades 52 to cut the cable lengths into shorter lengths. The cutting action occurs against each set of stationary blades 52. A part cylindrical screen 53 is arranged below the rotor 49 with perforations of a size to permit predetermined lengths of cut cable to pass therethrough. The cutting action is substantially continuous and continues until the cable lengths are cut to a size sufficient to pass through the perforated screen 53. The difference between the granulators 44 and 47 is essentially the size of the perforations of the screens 53. The screen 53 of granulator 44 includes perforations to allow cable lengths of about 15 to 25 mm to pass therethrough. The screen 53 of the second granulator 47 includes perforations that will allow cable lengths of about 3 to 6 mm to pass therethrough. The cable lengths passing through the perforated screen 53 passes into a chute 54 and from there onto a conveyor (Figure 4) for subsequent treatment.

The first granulator 44 delivers cut cable lengths onto a conveyor 55 which in turn delivers the cable lengths to a bulk storage bin 56. The purpose of the bulk storage bin 56 is to ensure a continuous even supply of cut cable lengths to the subsequent processing stages. The efficient operation of these stages is to some extent dependent upon the ability to maintain a uniform continuous supply of cut cable lengths. A screw conveyor 57 leads from the base of the bin 56 to an infeed conveyor 58 for the final or second granulator 47. A magnetic separating conveyor 59 extends transversely across the infeed conveyor 58 to finally pick up any ferrous elements that have escaped the earlier separation devices and deposit same into a waste storage bin 60. The cut cable lengths leaving the second granulator 47 are delivered by a conveyor 61 to the infeed means of the mechanical agitator 10. The discharged separate plastics material particles and metallic particles are delivered to the infeed zone of a vibrating screen separator 62 that has a plurality of outlets 63. The particles in the separator are separated such that the metal particles move to one end 64 and the plastics material particles move to the other end 65. In between these ends there may be a mixture of plastics material and metal which is removed and delivered along line 66 to the agitator infeed conveyor 61. The plastics material is delivered by conveyor 67 to a storage bin 76 so that it may be reprocessed into plastics articles as desired. The copper (or other non-ferrous metal) may be collected in a storage container 68 or undergo a further ferrous metal separation stage by being delivered onto a conveyor 69 with a magnetic separation roller 70, the ferrous metal being delivered to a waste bin (not shown) with the non-ferrous metal being delivered into bin 71.

As illustrated in Figure 4, a dust separation or extraction system might be employed including an extraction fan 72 with ducts 73 leading from the first and second granulators 44, 47, the storage bin 56, the agitator 10 and the separator 62. The extraction fan 72 may deliver the extracted air and dust to a cyclone separator 77. As an alternative to the precutting guillotine 36, it is also proposed to use a heavy duty shredder 74 with any suitable feed means such as grab buckets or the like 75 for delivering waste cable thereto.

By the use of apparatus in accordance with the present invention, it has been found possible to maintain high volume flow rates while also obtaining very high separation rates of copper (or other non-ferrous metals) from the plastics material sheathing.

## Claims

1. A method of separating copper or other non-ferrous metal from material in the form of non-ferrous metal wire sheathed in plastics material, said method comprising separating or dividing the material into short discrete lengths, subjecting the short discrete lengths to intensive mechanical agitation or beating whereby the non-ferrous metal is dislodged from surrounding plastics material in said short discrete lengths, and passing said non-ferrous metal and plastics material exiting from said mechanical agitation or beating to a separation step whereby the dislodged non-ferrous and plastics material are collected separately.

2. A method according to Claim 1, wherein in said separation step the non-ferrous metal and plastics material exiting from said mechanical agitation or beating is separated into plastics material, non-ferrous metal and a mixture of plastics material and non-ferrous metal, said mixture of plastics material and non-ferrous metal being recycled to said mechanical agitation or beating.

3. A method according to Claim 1 or Claim 2, wherein prior to said mechanical agitation or beating, said short discrete lengths of said material are fed into a bulk hopper to enable a uniform supply of short discrete lengths to the mechanical agitation or beating stage.

4. A method according to any one of Claims 1 to 3, wherein the mechanical agitation or beating of said short discrete lengths of said material occurs within a housing, the housing having an array of beating elements therein through which the material must pass to leave said housing, the beating elements being arranged in an array consisting of concentric circles of individual said beating elements, the beating elements in each said circle being moveable relative to beating elements in adjacent circles.

5. A method according to Claim 4, wherein alternate circles of said beating elements are stationary.

6. A method according to Claim 4, wherein alternate circles of said beating elements move in opposite directions.

7. Apparatus for separating the non-ferrous metal wire from the plastics material sheathing, said apparatus comprising a housing having inlet means for receiving short discrete lengths of non-ferrous metal sheathed in plastics material, mechanical agitating or beating means located within said housing arranged to mechanically stress said discrete lengths of non-ferrous metal sheathed in plastics material to dislodge the non-ferrous metal from the plastics material sheathing, and exit means from said housing for delivering the separate non-ferrous metal and plastics material from said housing for subsequent processing.

8. Apparatus according to Claim 7, wherein said mechanical agitating or beating means comprise a plurality of individual beating elements arranged in a predetermined array extending across said housing generally parallel to one another whereby the discrete lengths of non-ferrous metal sheathed in plastics material must pass through the array from said inlet means to said outlet means.

9. Apparatus according to Claim 8, wherein said array of beating elements comprises concentric circles of said beating elements whereby adjacent said circles of the beating elements are moveable relative to one another.

10. Apparatus according to Claim 9, wherein alternate said circles of beating elements are stationary.

11. Apparatus according to Claim 9, wherein alternate said circles of beating elements are moved in opposite directions.

12. Apparatus according to any one of Claims 9 to 11, wherein the inlet means directs the discrete lengths of non-ferrous metal sheathed in plastics material to an inlet zone within said housing inwardly of an innermost circle of said beating elements.

13. Apparatus according to Claim 12, wherein the exit means directs the separate non-ferrous metal and plastics material generally tangentially from an exit zone within said housing externally of an outermost circle of said beating elements.

14. An installation including apparatus according to any one of Claims 7 to 13, said installation further including one or more separating or cutting devices arranged to cut or divide lengths of non-ferrous metal wire sheated in plastics material into said short discrete lengths and to deliver said short discrete lengths to said inlet means, and separation means provided to receive the separate non-ferrous metal and plastics material from said exit means to separate said plastic material from the non-ferrous

FIGURE. 1

FIGURE. 2

FIGURE.3

EP 0 296 791 A2

FIGURE 4

FIGURE.5